# EUROPEAN PATENT SPECIFICATION

(11) **EP 1 527 966 B1**
(45) Date of publication and mention of the grant of the patent: **05.07.2006**
(21) Application number: 04023407.2
(22) Date of filing: 01.10.2004
(51) Int. Cl.: B60R 21/34

(54) **Protection device for pedestrian or the like**
Schutzvorrichtung für Fussgänger oder dergleichen
Dispositif de protection pour piétons et analogue

(30) Priority: 31.10.2003 JP 2003373292; 21.04.2004 JP 2004125683
(43) Date of publication of application: 04.05.2005
(73) Proprietor: TAKATA CORPORATION, Minato-ku, Tokyo 106-8510 (JP)
(72) Inventor: Takimoto, Takayuki, Minato-ku Tokyo 106-8510 (JP)
(74) Representative: Banzer, Hans-Jörg

(56) References cited:
- EP-A- 1 176 062
- DE-A- 10 059 223
- DE-U- 20 119 580
- PATENT ABSTRACTS OF JAPAN vol. 1996, no. 01, 31 January 1996 (1996-01-31) & JP 07 246908 A (TOYOTA MOTOR CORP; others: 01), 26 September 1995 (1995-09-26)

## Description

### [Technical Field of the Invention]

The present invention relates to a device for protecting a pedestrian or an occupant of a bicycle or a motorbike (referred to as a pedestrian or the like below) when a moving automobile collides with a pedestrian, a bicycle, or a motorbike by preventing rigid parts of an automobile body, such as pillars, from directly hitting against the pedestrian or the like.

### [Description of the Related Art]

When a moving automobile collides with a pedestrian, a bicycle, or a motorbike, the lower body of the collided pedestrian or the like is kicked over the front body of the automobile and thrown up on a hood covering the front upper surface of the body so as to possibly collide with a rigid part of the body such as a pillar for a second time.

A protection device for a pedestrian or the like is disclosed in Japanese Unexamined Patent Application Publication No. 2000-264146 in that when an automobile collides with a pedestrian or the like, an airbag is inflated along a cowl-top and lateral A-pillars of the automobile so as to prevent the pedestrian or the like from directly hitting against the vicinity of the cowl-top and the A-pillars for protecting the pedestrian or the like.

Japanese Patent Publication No. 2888116 (especially in Fig. 7) discloses a protection device for a pedestrian or the like having a hood airbag covering a large portion of a hood along the center to the rear thereof and a pillar airbag covering A-pillars.

DE 20119580 U1 relates to a protection device according to the preamble of claim 1.

### [Problems to be Solved by the Invention]

In Japanese Unexamined Patent Application Publication No. 2000-264146 and Japanese Patent Publication No. 2888116, since a long and narrow airbag for pillars is inflated along A-pillars from below upward without any guide, the pillar airbag may deviate from the A-pillars, so that it has been necessary to unnecessarily increase the width of the airbag.

It is an object of the present invention to provide a protection device for a pedestrian or the like having an airbag securely inflating along A-pillars.

### [Means for Solving the Problems]

According to the present invention, this object is achieved by a protection device as defined in claim 1. The dependent claims are preferred and advantageous embodiments of the invention.

In a protection device according to the present invention having airbags to be developed along the external surface of a vehicle body for a pedestrian or the like, the protection device includes a first airbag to be inflated so as to cover at least the vicinity of the center of a cowl-top; and second airbags to be inflated so as to cover at least A-pillars on both sides of the first airbag, respectively, wherein the first airbag is started to inflate in advance, and the second airbags are constructed to upward inflate along the A-pillars in contact with the inflated first airbag.'

In a protection device for a pedestrian or the like according to the invention, the second airbags may be started to inflate after a lapse of 5 to 30 mSec from the start of the first airbag.

In a protection device for a pedestrian or the like according to the invention, the first airbag may be inflated so as to also cover the rear of a bonnet hood while the second airbags may be inflated so as to also cover the back parts of fenders, respectively.

### [Advantages]

According to the present invention, since the second airbags are upward inflated so as to contact the inflated first airbag, the second airbags are inflated under the guidance of the inflated first airbag so as to securely cover the A-pillars.

According to the present invention, it is preferable that after a lapse of 5 to 30 mSec, especially 10 to 25 mSec, about 20 mSec in particular, from the start of the first airbag inflation, the second airbags are started to inflate. By such a structure, after at least the lateral both sides of the first airbag are sufficiently inflated, preferably after the entire of the first airbag is completed to inflate, the second air bags are upward inflated in contact with the first airbag. Thereby, the inflating direction of the second airbags is stable, and the second airbags securely inflate along the A-pillars.

According to the present invention, in the case where the first airbag is inflated so as to also cover the rear of a bonnet hood while the second airbags are inflated so as to also cover the back parts of fenders, respectively, a pedestrian or the like hitting against the rear of the bonnet hood can be sufficiently protected. Such a mode is suitable to an automobile having a comparatively long bonnet hood.

### [Brief Description of the Drawings]

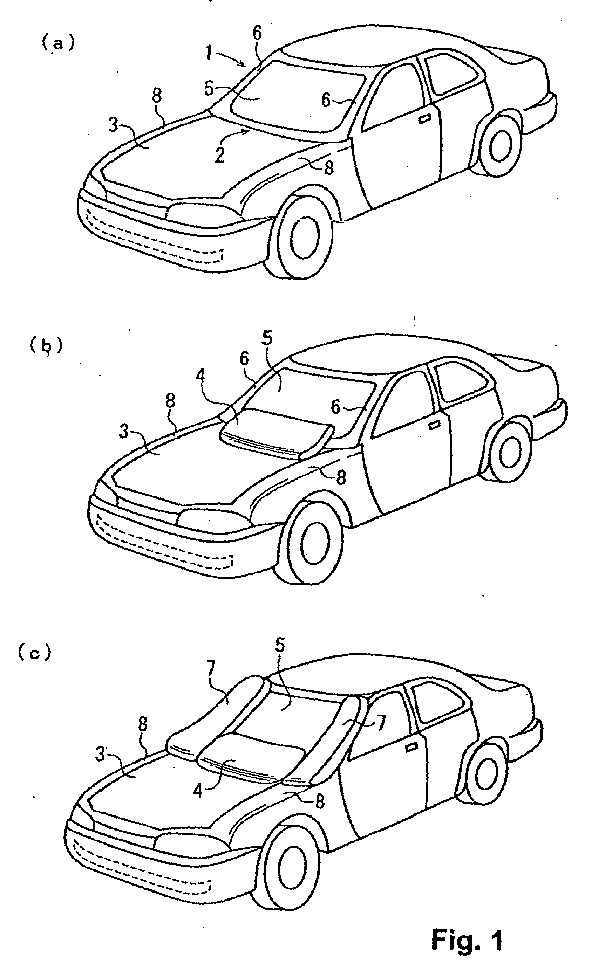

Fig. 1 is a perspective view of a protection device for a pedestrian or the like according to an embodiment.

### [Description of the Embodiments]

An embodiment will be described below with reference to the drawings. Fig. 1 is a perspective view of an automobile having a protection device for a pedestrian or the like according to the embodiment.

As shown in Fig. 1(a), an automobile 1 is a four-door sedan having a wraparound distance (WAD) to the rear edge of a cowl-top 2 of about 1300 to 1900 mm; however, the present invention is not limited to this. In the rear of a bonnet hood 3 or the cowl-top 2, a first airbag device is provided for opening and inflating a first airbag 4 upon colliding with a pedestrian or the like. Although not shown, the first airbag device is provided with the first airbag 4, a container containing the folded first airbag 4, an inflator for inflating the first airbag 4, and a lid normally covering the container and being opened during inflation of the first airbag 4. The lid may constitute an external surface of a vehicle body. Also, the first airbag device may be arranged below the rear of the bonnet hood 3 so as to push and open the back of the bonnet hood 3 when the first airbag 4 is inflated.

A second airbag device having second airbags 7 respectively covering A-pillars 6 on either side of a windshield 5 is arranged on either end of the vehicle body in the width direction such as within the A-pillars 6 or in the rear of a bonnet (the rear of the bonnet hood 3 or the cowl-top 2). The second airbag device for the pillars is provided with the second airbags 7 inflating along the A-pillars 6, containers accommodating the folded second airbags 7, inflators for inflating the second airbags 7, and lids normally covering the containers and being opened during inflation of the second airbags 7. The second airbag device is located in the vicinities of both ends of the cowl-top 2 in the width direction of the vehicle body or in the vicinities of rears of fenders 8. In this case, the lids may also constitute external surfaces of the vehicle body. Also, the second airbag device may be arranged below the rear of the bonnet hood 3 together with the first airbag device so as to inflate along the A-pillars 6 from under the bonnet hood 3 after the first airbag 4 is inflated so as to push and open the rear of the bonnet hood 3.

The airbags 4 and 7 may be provided with vent holes (not shown), respectively.

The first and second airbag devices are arranged so that the second airbags 7 are upward inflated along the A-pillars in contact with the first airbag 4 after the first airbag 4 is inflated. That is, in the front of the automobile 1, a sensor is provided for detecting the collision with a pedestrian or the like so that a detection signal of the sensor is to be entered to a control circuit for controlling the airbag device. Upon detecting the collision with a pedestrian or the like, the control circuit for controlling the airbag device firstly ignites a gas generator of the first airbag device to be operated and then, as shown in Fig. 1(b), inflates the first airbag 4 so as to cover the vicinity of the cowl-top 2 (however, except both ends of the cowl-top 2 in the width direction of the vehicle body), the lower side of the windshield 5 (however, except both ends of the windshield 5 in the width direction of the vehicle body), and the vicinity of the rear side of the bonnet hood 3.

After a lapse of about 5 to 30 mSec, approximately 20 mSec, for example, from the ignition of the gas generator of the first airbag device, a gas generator of the second airbag device is ignited. Then, after at least the lateral both sides of the first airbag 4 are sufficiently inflated, preferably after the entire of the first airbag 4 is completed to inflate, as shown in Fig. 1(c), the second air bags 7 are upward inflated along the A-pillars 6 so as to cover the substantial entire of the A-pillars 6. The inflated airbags 4 and 7 receive the pedestrian or the like while the impact is absorbed by the flowing out of gas through the vent holes.

According to the embodiment, after the first airbag 4 is inflated, the second airbags 7 are inflated so as to contact the first airbag 4. Since the second airbags 7 are inflated under the guidance of the inflated first airbag 4, the inflating direction is stable, and the second airbags 7 inflate along the A-pillars 6 until the inflation completion state for securely covering the A-pillars 6.

According to the embodiment, any of the airbags 4 and 7 covers a comparatively small region so that each capacity is relatively little. Accordingly, cost of the airbag and the gas generator is low and small spaces accommodating the airbags are also enough. Furthermore, the rate between the capacity of each airbag and the gas flowing speed from the vent hole (the size of the vent hole) is suitable, and each of the airbags 4 and 7 is sufficiently promptly inflated while the inflated state thereof is maintained for a long time. Moreover, the impact is also absorbed sufficiently.

However, any of the airbags 4 and 7 may also be constructed so as to cover a wide region adjacent to the front of the vehicle more than that shown in the drawing.

According to the embodiment, the first airbag and the second airbags are provided separately from each other; alternatively, the inside of one bag may also be divided into chambers so as to consequently provide the first and second airbags therein.

## Claims

1. A protection device having airbags to be developed along the external surface of a vehicle body (1) for a pedestrian or the like, the protection device comprising:
a first airbag (4) to be inflated so as to cover at least the vicinity of the center of a cowl-top (2); and
second airbags (7) to be inflated so as to cover at least A-pillars (6) on both sides of the first airbag (4), respectively, carachterised in that
the first airbag (4) is started to inflate in advance, and the second airbags (7) are constructed to upward inflate along the A-pillars (6) in contact with and under the guidance of the inflated first airbag (4).

2. A device according to Claim 1, wherein the second airbags (7) are started to inflate after a lapse of 5 to 30 mSec from the start of the first airbag inflation.

3. A device according to Claim 1 or 2, wherein the first airbag (4) is inflated so as to also cover the rear of a bonnet hood (3) while the second airbags (7) are inflated so as to also cover the back parts of fenders (8), respectively.

## Patentansprüche

1. Schutzvorrichtung mit Airbags, welche entlang der äußeren Oberfläche eines Fahrzeugkörpers (1) für einen Fußgänger oder dergleichen auszubilden sind, wobei die Schutzvorrichtung umfasst:
einen ersten Airbag (4), welcher derart aufzublasen ist, dass er zumindest die Nähe der Mitte einer Verkleidungsoberseite (2) überdeckt; und
zweite Airbags (7), welche derart aufzublasen sind, dass sie zumindest A-Säulen (6) auf beiden Seiten des ersten Airbags (4) entsprechend überdecken,
**dadurch gekennzeichnet,**
**dass** der erste Airbag (4) im Voraus beginnt sich aufzublasen, und dass die zweiten Airbags (7) derart ausgebildet sind, dass sie sich nach oben entlang der A-Säulen (6) in Kontakt mit und unter der Führung des aufgeblasenen ersten Airbags (4) aufblasen.

2. Vorrichtung nach Anspruch 1, wobei die zweiten Airbags (7) nach 5 bis 30ms nach dem Beginn des Aufblasens des ersten Airbags beginnen sich aufzublasen.

3. Vorrichtung nach Anspruch 1 oder 2, wobei der erste Airbag (4) derart aufgeblasen wird, dass er auch das Hintere einer Motorhaube (3) überdeckt während die zweiten Airbags (7) aufgeblasen werden, um so auch entsprechend die rückseitigen Teile von Kotflügeln (8) zu überdecken.

## Revendications

1. Un dispositif de protection ayant des coussins gonflables ou airbags devant se développer le long de la surface extérieure d'une caisse de véhicule (1) pour un piéton ou similaires, le dispositif de protection comprenant:
un premier coussin gonflable (4), devant se gonfler de façon à couvrir au moins le voisinage du centre d'un dessus de capot (2); et
des deuxièmes coussins gonflables (7), devant se gonfler de façon à couvrir au moins des montants de pare-brise A (6) de chaque côté du premier coussin gonflable (4), respectivement, **caractérisé en ce que** le premier coussin gonflable (4) commence à se gonfler à l'avance, et les deuxièmes coussins gonflables (7) sont conçus pour se gonfler vers le haut, le long des montants de pare-brise A (6), en contact avec le premier coussin gonflable (4) gonflé, et en étant guidés par celui-ci.

2. Un dispositif selon la revendication 1, dans lequel les deuxièmes coussins gonflables (7) commencent à se gonfler après un laps de temps de 5 à 30 ms à compter de la mise en route du gonflage du premier coussin gonflable.

3. Un dispositif selon la revendication 1 ou 2, dans lequel le premier coussin gonflable (4) est gonflé de façon à couvrir également l'arrière d'un capot (3), tandis que les deuxièmes coussins gonflables (7) sont gonflés de façon à couvrir également les parties arrières des ailes (8), respectivement.
